# EUROPÄISCHE PATENTSCHRIFT

(11) **EP 0 806 067 B1**
(45) Veröffentlichungstag und Bekanntmachung des Hinweises auf die Patenterteilung: **09.09.1998**
(21) Anmeldenummer: 96900853.1
(22) Anmeldetag: 16.01.1996
(51) Int. Cl.: H02B 11/127

(54) **VORRICHTUNG ZUR BEEINFLUSSUNG EINES FAHRANTRIEBES EINES SCHALTGERÄTES**
DEVICE FOR AFFECTING A TRAVELLING SYSTEM OF A SWITCH
DISPOSITIF POUR INFLUER SUR UN ORGANE DE TRANSLATION D'UN APPAREIL DE COMMUTATION

(30) Priorität: 26.01.1995 DE 19503624
(43) Veröffentlichungstag der Anmeldung: 12.11.1997
(73) Patentinhaber: SIEMENS AKTIENGESELLSCHAFT, 80333 München (DE)
(72) Erfinder: GODESA,Ludvik, D-10777 Berlin (DE)
(86) Internationale Anmeldenummer: DE9600107
(87) Internationale Veröffentlichungsnummer: WO9623338

(56) Entgegenhaltungen:
- DE-A- 3 545 780
- DE-A- 4 131 328
- DE-A- 4 315 490
- FR-A- 2 581 805

## Beschreibung

Die Erfindung betrifft eine Vorrichtung zur Beeinflussung eines Fahrantriebes eines fahrbar angeordneten Schaltgerätes in Abhängigkeit von der Stellung einer Tür einer das Schaltgerät aufnehmenden Schaltzelle, wobei der Fahrantrieb eine Gewindespindel aufweist und im Zugangsweg zu der Gewindespindel ein Schieber angeordnet ist, der durch ein Sperrglied in Abhängigkeit von einer durch die Tür betätigbaren und durch eine Rückstellkraft in eine Ruhestellung vorgespannte Schubstange blokierbar ist.

Eine Vorrichtung der genannten Art ist durch die DE-A-35 45 780 bekannt geworden. Der Fahrantrieb ist dabei ortsfest angeordnet und weist eine Gewindespindel auf, durch die eine von dem Schaltgerät erfaßte Traverse bewegbar ist. Das Sperrglied ist am vorderen Ende einer Führungsstange angebracht, die beim Drehen der Gewindespindel derart mitgeführt wird, daß das Sperrglied stets dieselbe Grundstellung zum Kopf der Gewindespindel besitzt. Jedoch ist das Sperrglied zur Freigabe der Positionsverriegelung durch das zur Bedienung der Gewindespindel vorgesehene Werkzeug verschiebbar. Der durch die Tür der Schaltzelle betätigbare Schieber sperrt die Führungsstange mit dem Sperrglied mittels eines biegsamens Übertragungsorgans.

Bei einer anderen bekannten Bauweise von Schaltanlagen ist der Fahrantrieb an dem fahrbar angeordneten Schaltgerät angebracht. Im Zusammenhang hiermit wurde bereits vorgeschlagen (DE-Patentanmeldung P 44 20 582), an dem Fahrantrieb des Schaltgerätes als Sperrglied einen Sperrhebel vorzusehen, der durch die Tür der das Schaltgerät aufnehmenden Schaltzelle betätigbar ist. Eine solche Anordnung erfordert eine mechanische Verbindung zwischen der Tür bzw. der von dieser zu betätigenden Schubstange und dem Sperrhebel, der jedoch durch die Fahrbewegung des Schaltgerätes seine Lage relativ zu der Schubstange verändert. Der Erfindung liegt die Aufgabe zugrunde, eine hierfür geeignete Vorrichtung zu schaffen, die durch das Einsetzen eines Schaltgerätes in eine Schaltzelle selbsttätig in Eingriff gebracht wird und ungeachtet der unterschiedlichen Stellungen des Schaltgerätes innerhalb der Schaltzelle wirksam ist.

Diese Aufgabe wird bei einer Vorrichtung der eingangs genannten Art gemäß der Erfindung bei an dem Schaltgerät angebrachtem Fahrantrieb, der als Sperrglied einen schwenkbar gelagerten und eine Arbeitsfläche aufweisenden Sperrhebel besitzt, dadurch gelöst, daß die Schubstange einen entlang einer Schrägfläche verschiebbaren Schenkel als Betätigungsglied des Sperrhebels besitzt und daß die Schrägfläche in einem solchen Neigungswinkel angeordnet ist, daß der Sperrhebel bei geöffneter Tür eine Sperrstellung einnimmt und aufgrund des Schließens der Tür durch axiale Beaufschlagung der Schubstange mittels des Schenkels in eine Freigabestellung überführbar ist.

Durch die Verschiebung der Schubstange entlang der Schrägfläche verändert sich die relative Lage des betreffenden Abschnittes der Schubstange zu dem Schaltgerät, wodurch der Sperrhebel betätigbar ist. Bei geeigneter Zuordnung der Schubstange und des Leistungsschalters wird daher der Sperrhebel grundsätzlich beim Schließen der Tür beaufschlagt, gleichgültig, welche der möglichen Stellungen das Schaltgerät einnimmt, insbesondere Betriebsstellung, Teststellung oder Trennstellung.

Bei gasisolierten Mittelspannungs-Schaltanlagen ist bereits eine Verriegelungseinrichtung bekannt, die zum Verschließen des Zuganges zu einer Betätigungswelle eines Schalterantriebes dient, wenn die Tür eines Kabelanschlußraumes geöffnet ist (DE 41 31 328 A1). Hierzu weist die Verriegelungseinrichtung einen mittels eines Übertragungsgestänges betätigbaren Schieber zur Abdeckung der Betätigungswelle auf. Das Übertragunsggestänge steht mit dem Vorreiber des Türverschlusses so in Verbindung, daß beim Öffnen der Tür zwangsläufig die Betätigungswelle gegen Betätigung gesperrt wird. Demgegenüber betrifft die Erfindung fahrbar angeordnete Schaltgeräte und eine Vorrichtung zur Sperrung des zugehörigen Fahrantriebes, wenn die Tür einer das Schaltgerät aufnehmenden Schaltzelle geöffnet wird. Dabei befindet sich der zu sperrende Fahrantrieb am Schaltgerät, während eine von der Tür zu beaufschlagende Schubstange ortsfest angeordnet ist.

Die Schubstange kann eine U-förmige Grundform mit zwei Schenkeln aufweisen, wobei der eine Schenkel in einem sich etwa rechtwinklig zur Türebene der Schaltzelle erstreckenden Führungsrohr geführt ist und der andere Schenkel durch die Rückstellfeder in Berührung mit der Schrägfläche gehalten wird. Das Führungsrohr kann hierbei dem Durchmesser der Schubstange spielarm angepaßt sein, weil außer einer axialen Verschiebung der Schubstange beim Schließen der Tür bzw. beim Öffnen nur eine geringe Winkeldrehung aufgrund der Verschiebung des anderen Schenkels der Schubstange entlang der Schrägfläche auftritt. Das ständige Anliegen des einen Schenkels der Schubstange an der Schrägfläche ist dadurch zu erreichen, daß die Rückstellfeder mit einem entsprechenden Angriffswinkel montiert ist.

Die erwähnte Schrägfläche kann Bestandteil eines am Boden der Schaltzelle zu montierenden Trägers des Führungsrohres sein. Auch kann das Führungsrohr einen Gewindeabschnitt und der Träger eine Durchgangsöffnung für den Gewindeabschnitt aufweisen, derart, daß das Führungsrohr in der Tiefenerstreckung der Schaltzelle verstellbar zu montieren ist. Durch diese Gestaltung ist die Möglichkeit geschaffen, die Vorrichtung zur Beeinflussung des Fahrantriebes des Schaltgerätes als einfach nachrüstbare Baugruppe auszubilden.

Unter Schaltzelle wird im Zusammenhang mit der vorstehenden Darstellung der Erfindung ein Raum in einer Schaltanlage oder einem Schaltschrank verstanden, der zur Aufnahme eines Schaltgerätes vorgesehen ist und die hierzu benötigten Einrichtung wie Fahrschienen, Trennkontakte, Abschottungen und weitere Teile aufweist. Dabei können in an sich bekannter Weise die erwähnten Hilfseinrichtungen an einem Einschubrahmen angebracht sein, der in die Schaltanlage oder den Schaltschrank einzusetzen ist. Als Schaltgerät sind Leistungsschalter für Niederspannung oder Mittelspannung oder Kombinationen von Schaltgeräten auf einem gemeinsamen Träger verwendbar.

Die Erfindung wird im folgenden anhand des in den Figuren dargestellten Ausführungsbeispieles näher erläutert.

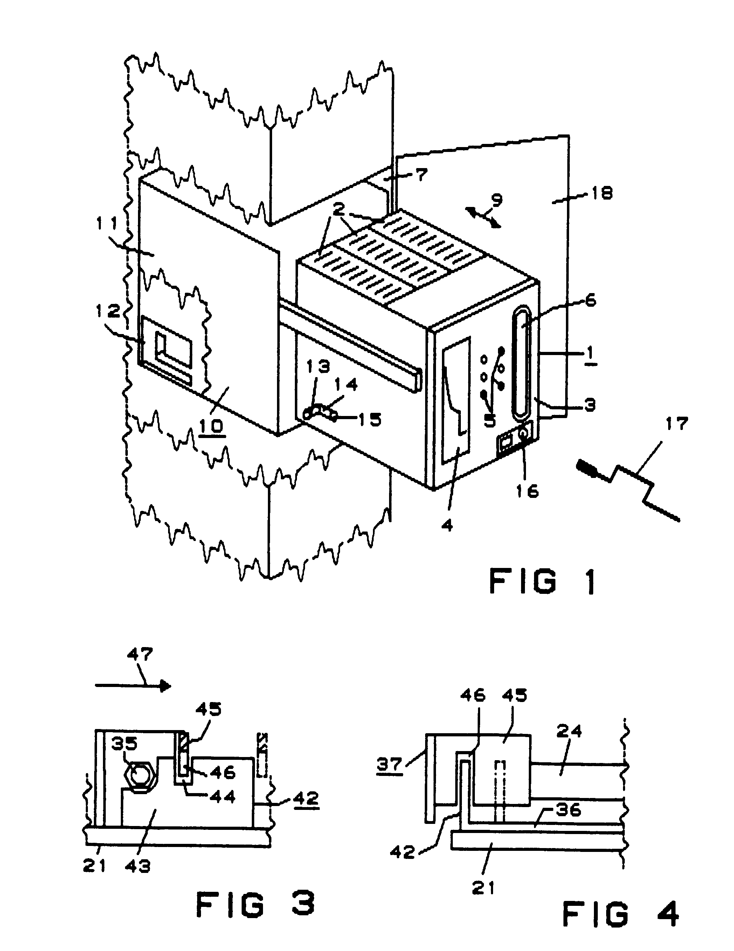

Die Figur 1 zeigt schematisch einen Niederspannungs-Leistungsschalter in Verbindung mit einer Schaltzelle und einem darin angeordneten Einschubrahmen.

Eine im folgenden als Fahrantrieb bezeichnete Einrichtung zum Einfahren und Ausfahren des in der Figur 1 gezeigten Leistungsschalters innerhalb seines Einschubrahmens ist in der Figur 2 in der Draufsicht gezeigt.

Ein im stirnseitigen Endbereich der Einrichtung gemäß der Figur 2 angeordneter Schieber sowie ein zugehöriges Verschlußorgan sind in der Figur 3 in einer Frontansicht und in der Figur 4 in einer Seitenansicht dargestellt.

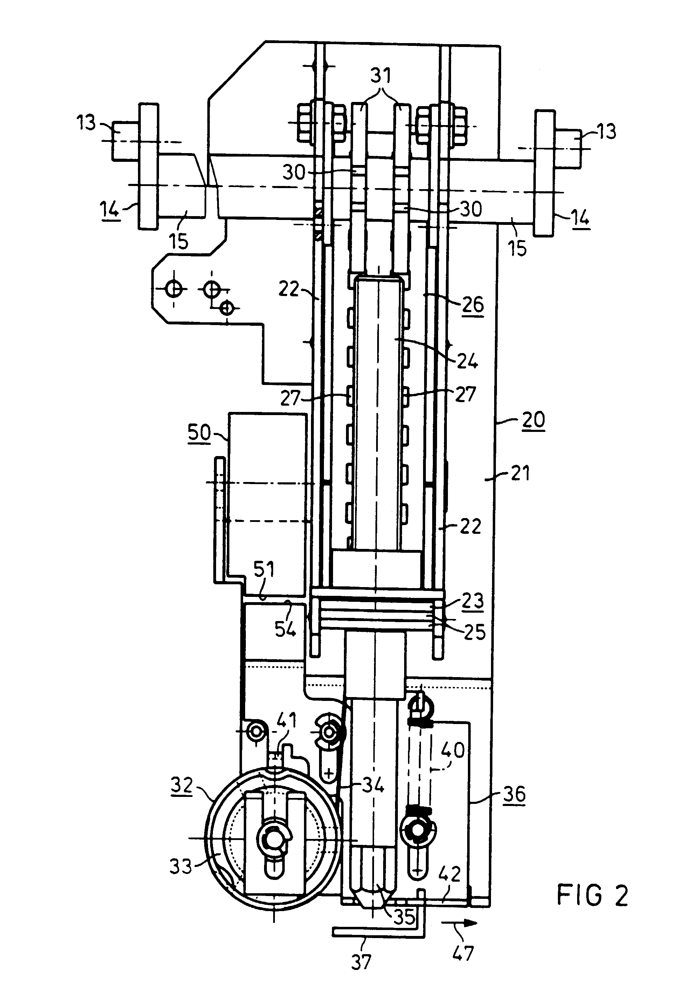

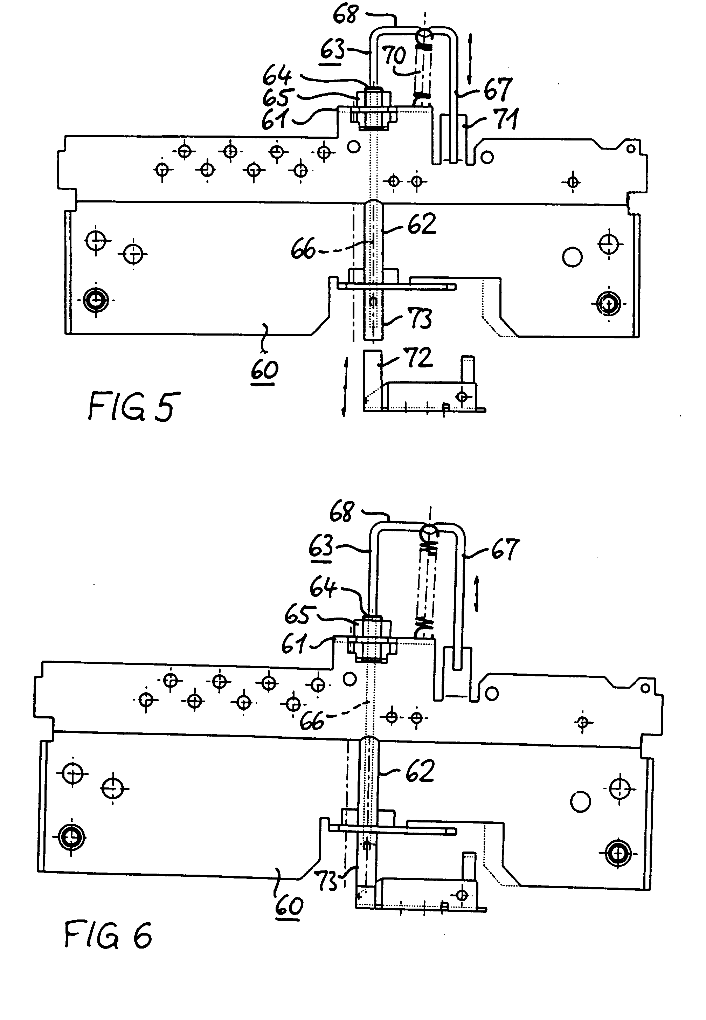

Die Figuren 5 und 6 zeigen einen am Boden des in der Figur 1 angedeuteten Einschubrahmens angeordneten Träger mit einem Führungsrohr für eine Schubstange in der Draufsicht. In der Figur 5 ist die Schubstange bei geöffneter Tür der Schaltzelle dargestellt, während die Figur 6 die Schubstange bei geschlossener Tür zeigt.

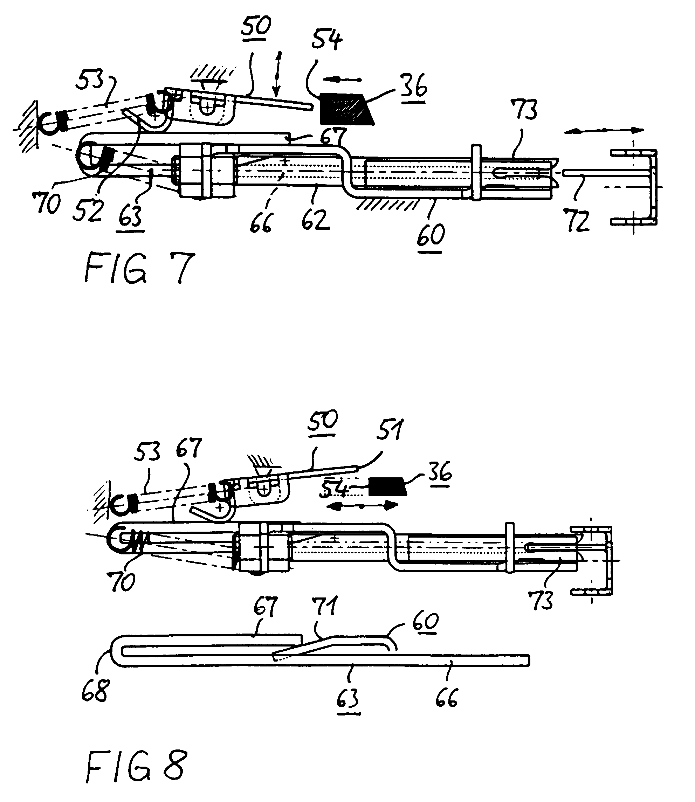

Das Zusammenwirken zwischen der Schubstange gemäß den Figuren 5 und 6 und einem zu dem Fahrantrieb gemäß der Figur 2 gehörenden Sperrhebel zeigt die Figur 7 für den Zustand bei geöffneter Tür der Schaltzelle und die Figur 8 bei geschlossener Tür.

In der Figur 1 ist als Schaltgerät 1 ein Niederspannungs-Leistungsschalter mit Löschkammern 2 und einem Bedienungspult 3 gezeigt. An dem Bedienungspult 3 ist links ein elektronischer Überstromauslöser 4 und rechts ein Handhebel 6 zum Spannen eines Federspeichers gezeigt, während Bedienungselemente 5 zur Betätigung des Schaltgerätes 1 in der Mitte angeordnet sind. Eine Schaltzelle 7 ist Bestandteil eines Schaltschrankes oder einer mehrfeldrigen Schaltanlage und enthält einen Einschubrahmen 10, in den das Schaltgerät 1 einsetzbar ist. Seitenwände 11 des Einschubrahmens 10 sind mit einem Kulissenstück 12 versehen, in das ein Kurbelzapfen 13 eines Kurbelarmes 14 eingreift, der durch eine Einfahrwelle 15 schwenkbar ist. Eine Öffnung 16 in dem Bedienungspult 3 dient zum Einstecken eines Werkzeuges 17 zum Ein- und Ausfahren des Schaltgerätes 1 in der Richtung des Doppelpfeiles 9. Die Schaltzelle 7 ist durch eine in geöffneter Stellung angedeutete Tür 18 verschließbar.

Die Einfahrwelle 15 ist Bestandteil eines näher in der Figur 2 dargestellten Fahrantriebes 20, der als zusammenhängende Baugruppe ausgebildet und an der Unterseite des Schaltgerätes 1 (Figur 1) montiert ist. Der Fahrantrieb 20 umfaßt eine Grundplatte 21 sowie zwei rechtwinklig auf diesem stehende Seitenwände 22. Ein mit den Seitenwänden 22 verbundenes Stützlager 23 dient zur axialen Astützung einer Gewindespindel 24, mittels der die Einfahrwelle 15 drehbar ist. Hierzu dient eine auf der Gewindespindel 24 sitzende Wandermutter 25, die mit einer auf der Grundplatte 21 geführten Zahnstange 26 verbunden ist. Mit in zwei parallelen Reihen angeordneten Löchern 27 der Zahnstange 26 wirken Zähne 30 von zwei parallel zueinander auf der Einfahrwelle 15 befestigten Zahnrädern 31 zusammen. An beiden Enden der Einfahrwelle 15 befindet sich je ein Kurbelarm 14 mit einem Kurbelzapfen 13.

Zum Fahrantrieb 20 gehört eine als Ganzes mit 32 bezeichnete Anzeigevorrichtung für die Stellung des Schaltgerätes 1 in seinem Einschubrahmen 10 (Figur 1). Während die Anzeigevorrichtung 32 in der erwähnten DE-Patentanmeldung P 44 20 582 ausführlich beschrieben ist, werden nachstehend nur die zum Verständnis des Zusammenwirkens des Fahrantriebes 20 mit der Tür 18 (Figur 1) benötigten Einzelheiten erläutert.

Die Anzeigevorrichtung 32 (Figur 2) weist eine auf der Grundplatte 21 drehbar gelagerte Trommel 33 auf, an deren Umfang ein mit der Wandermutter 25 verbundenes Drahtseil 34 anliegt. Eine nicht gezeigte, im Inneren der Trommel 33 untergebrachte Feder spannt die Trommel 33 derart vor, daß das Drahtseil 34 ständig gespannt ist. Durch Drehen der Gewindespindel 24 mittels des auf ein stirnseitiges Kopfstück 35 aufzusetzende Werkzeug 17 (Figur 1) wird somit zugleich mit der Einfahrwelle 15 auch die Trommel 33 bewegt. Dem Benutzer werden hierdurch am Umfang der Trommel 33 angeordnete Markierungen für die Stellungen des Schaltgerätes 1, insbesondere die Betriebsstellung, die Teststellung und die Trennstellung, in einem Sichtfenster des Bedienungspultes 3 dargeboten.

Der Zugang zu dem Kopfstück 35 der Gewindespindel 24 ist durch einen Schieber 36 und ein von diesem abhängiges Verschlußorgan 37 versperrbar. Beide Teile werden im folgenden zusätzlich unter Bezugnahme auf die Figuren 3 und 4 erläutert. Der Schieber 36 ist auf der Grundplatte 21 aufliegend in der Richtung der Längsachse der Gewindespindel 24 verschiebbar geführt und durch eine Zugfeder 40 in Richtung auf die Trommel 33 vorgespannt. Eine Rastzunge 41 des Schiebers 36 wirkt mit Ausnehmungen zusammen, die am Umfang der Trommel 33 in Positionen angeordnet sind, die den erwähnten Stellungen des Schaltgerätes 1 innerhalb des Einschubrahmens 10 entsprechen. Ferner besitzt der Schieber 36 eine frontseitige Abwinklung 42, durch die eine Anschlagfläche 43 für das Werkzeug 17 (Figur 1) gebildet ist. Daher wird der Schieber 36 beim Aufsetzen des Werkzeuges 17 auf das Kopfstück 35 verschoben und hierdurch die Rastzunge 41 außer Eingriff mit der Trommel 33 gebracht.

Der Schieber 36 ist im Bereich seiner Abwinklung 42 mit einer Ausnehmung 44 versehen, die mit dem erwähnten Verschlußorgan 37 (Figuren 2, 3 und 4) zusammenwirkt. Das Verschlußorgan 37 ist in geeigneter Weise quer zu der Gewindespindel 24 verschiebbar geführt und besitzt einen die Abwinklung 42 übergreifenden Sperrarm 45. Wie näher die Figuren 3 und 4 zeigen, ist der Sperrarm 45 gleichfalls mit einer derart angeordneten Ausnehmung 46 versehen, daß das Verschlußorgan 37 in der Richtung eines in den Figuren 2 und 3 gezeigten Pfeiles 47 verschoben und damit das Kopfstück 35 der Gewindespindel 24 zugänglich gemacht werden kann.

Wird das Werkzeug 17 von der Gewindespindel 24 abgezogen, wenn sich das Schaltgerät 1 nicht in einer der vorgesehenen Positionen, d. h. der Betriebsstellung, der Teststellung oder der Trennstellung befindet, so kann der Schieber 36 nicht in seine Ausgangsstellung zurückkehren, weil die Rastzunge 41 nicht einer der Ausnehmungen am Umfang der Trommel 33 gegenübersteht, die den genannten Positionen zugeordnet sind. Das Verschlußorgan 37 kann gleichfalls nicht in seine Ausgangslage zurückgestellt werden, weil der Sperrarm 45 gegen die rechte Kante der Abwinklung 42 des Schiebers 36 stößt.

Wie näher die Figur 2 in Verbindung mit den Figuren 7 und 8 zeigt, ist an der Grundplatte 21 des Fahrantriebes 20 ein Sperrhebel 50 angebracht. Der Sperrhebel 50 ist bezüglich einer strichpunktiert angedeuteten Schwenkachse zweiarmig ausgebildet und besitzt an dem Ende des einen Hebelarmes eine Arbeitsfläche 51 und an dem Ende des anderen Hebelarmes einen Tastwinkel 52. Durch eine als Zugfeder ausgebildete Rückstellfeder 53, die an dem mit dem Tastwinkel 52 versehenen Ende des Sperrhebels 50 angreift, erhält der Sperrhebel eine Vorspannung in eine Winkelstellung, in der die Arbeitsfläche 51 von einer Gegenfläche 54 des Schiebers 36 entfernt ist und daher der Schieber 36 in der beschriebenen Weise durch das Werkzeug 17 verschiebbar ist. Der Sperrhebel ist jedoch, wie dies noch näher erläutert wird, entgegen der Wirkung der Rückstellfeder 53 derart schwenkbar, daß die Arbeitsfläche 51 der Gegenfläche 54 des Schiebers 36 gegenübersteht und dadurch der Schieber 36 blockiert ist.

Im unteren Bereich des Einschubrahmens 10 ist ein in den Figuren 5 und 6 gezeigter Träger 60 angeordnet, der einen abgewinkelten Schenkel 61 aufweist, durch den sich ein Führungsrohr 62 für eine Schubstange 63 erstreckt. Das Führungsrohr 62 ist mit einem Gewindeabschnitt 64 versehen, auf dem zwei den Schenkel 61 zwischen sich erfassende Muttern 65 sitzen. Durch Verstellen der Muttern 65 auf dem Gewindeabschnitt 64 kann somit das Führungsrohr 62 in einer gewünschten Stellung relativ zu dem Träger befestigt werden. Auf diese Weise kann das Führungsrohr 62 rechtwinklig zu der Türebene der Schaltzelle 7 (Figur 1) derart ausgerichtet werden, daß die Schubstange 63 beim Schließen der Tür 18 (Figur 1) einem zur Betätigung des Sperrhebels 50 (Figur 8) ausreichenden Hub ausführt.

Die Schubstange 63 weist eine U-förmige Grundform auf und besitzt einen in dem Führungsrohr 62 aufgenommenen Schenkel 66 und einen parallel hierzu verlaufenden freiliegenden Schenkel 67. Ein die Schenkel 66 und 67 verbindender Querschenkel 68 dient als Widerlager einer Rückzugfeder 70, die winklig zur Richtung des Führungsrohres 62 wirkt. Hierdurch wird das Ende des freiliegenden Schenkels 67 stets in Berührung mit einer Schrägfläche 71 gehalten, die durch einen entsprechend abgebogenen Teil des Trägers 60 gebildet ist.

Die Schubstange 63 ist durch ein mit der Tür 18 verbundenes Druckstück 72 betätigbar, das in einen geschlitzten Frontteil 73 des Führungsrohres 62 einführbar ist. Durch das Druckstück 72 wird der Schenkel 66 der Schubstange 63 derart beaufschlagt, daß der freiliegende Schenkel 67 entlang der Schrägfläche 71 verschoben wird. Hierdurch verändert der Schenkel 67 seine Stellung relativ zu dem Schaltgerät 1, wie dies nachfolgend anhand der Figuren 7 und 8 erläutert wird.

In den Figuren 7 und 8 ist schematisch der dem Träger 60 zugewandte untere Bereich des Schaltgerätes 1 gezeigt, an dem der Fahrantrieb 20 angebracht ist. Von dem Fahrantrieb 20 ist nur der Sperrhebel 50 und ein die Gegenfläche 54 aufweisender Abschnitt des Schiebers 36 dargestellt. Bei geschlossener Tür 18 (Figur 8) taucht das Druckstück 72 in das Führungsrohr 62 ein und hält die Schubstange 63 entgegen der Wirkung der Rückzugfeder 70 in einer Stellung, in der das Ende des freiliegenden Schenkels 67 auf der Schrägfläche 71 aufliegt und hierdurch eine relativ abgesenkte Stellung bezüglich des Tastwinkels 52 des Sperrhebels 50 einnimmt. Die Arbeitsfläche 51 ist daher von der Gegenfläche 54 des Schiebers 36 soweit entfernt, daß der Schieber 36 betätigt und die Gewindespindel 24 zur Verschiebung des Schaltgerätes 1 in der Schaltzelle 7 gedreht werden kann. Zur weiteren Veranschaulichung ist im unteren Teil der Figur 8 nur ein Teil des Trägers 60 mit der Schrägfläche 71 und die Schubstange 63 gezeigt.

Wird die Tür 18 geöffnet, so verläßt das Druckstück 72 den geschlitzten Frontteil 73 des Führungsrohres 62. Die Schubstange 63 folgt dieser Bewegung unter dem Einfluß der Rückzugfeder 70, bis das Ende des freiliegenden Schenkels 67 am oberen Ende der Schrägfläche 71 anlangt und damit eine relativ angehobene Stellung des Schenkels 67 gegenüber dem Schaltgerät 1 erreicht ist. Hierdurch wird der Sperrhebel 50 entgegen der Wirkung der Rückstellfeder 53 so geschwenkt, daß die Arbeitsfläche 51 der Gegenfläche 54 des Schiebers 36 direkt gegenübersteht und der Schieber 36 hierdurch gegen Verschiebung blockiert ist. Damit kann das Werkzeug 17 mit der Gewindespindel 24 nicht in Eingriff gebracht werden. Es ist daher auch nicht möglich, das Schaltgerät 1 in seinem Einschubrahmen 10 zu verfahren.

Der freiliegende Schenkel 67 erstreckt sich stets parallel zu der Unterseite des Schaltgerätes 1, so daß die Stellung des Sperrhebels 50 nicht verändert wird, wenn das Schaltgerät durch den Fahrantrieb 20 in dem Einschubrahmen 10 bzw. der Schaltzelle 7 verschoben wird. Der freiliegende Schenkel 67 ist hierzu so bemessen, daß der Tastwinkel 52 des Sperrhebels 50 innerhalb des gesamten vorgesehenen Fahrweges des Schaltgerätes 1 auf dem Schenkel 67 aufliegt.

## Patentansprüche

1. Vorrichtung zur Beeinflussung eines Fahrantriebes (20) eines fahrbar angeordneten Schaltgerätes (1) in Abhängigkeit von der Stellung einer Tür (18) einer das Schaltgerät (1) aufnehmenden Schaltzelle (7), wobei der Fahrantrieb (20) eine Gewindespindel (24) aufweist und im Zugangsweg zu der Gewindespindel (24) ein Schieber (36) angeordnet ist, der durch ein Sperrglied in Abhängigkeit von einer durch die Tür (18) betätigbaren und durch eine Rückstellkraft in eine Ruhestellung vorgespannte Schubstange (63) blockierbar ist, **dadurch gekennzeichnet,** daß bei an dem Schaltgerät (1) angebrachtem Fahrantrieb (20), der als Sperrglied einen schwenkbar gelagerten und eine Arbeitsfläche (51) aufweisenden Sperrhebel (50) besitzt, die Schubstange (63) einen entlang einer Schrägfläche (71) verschiebbaren Schenkel (67) als Betätigungsglied des Sperrhebels (50) besitzt und daß die Schrägfläche (71) in einem solchen Neigungswinkel angeordnet ist, daß der Sperrhebel (50) bei geöffneter Tür (18) eine Sperrstellung einnimmt und aufgrund des Schließens der Tür (18) durch axiale Beaufschlagung der Schubstange (63) mittels des Schenkels (67) in eine Freigabestellung überführbar ist.

2. Vorrichtung zur Beeinflussung eines Fahrantriebes nach Anspruch 1,
**dadurch gekennzeichnet,** daß die Schubstange (63) eine U-förmige Grundform mit zwei Schenkeln (66, 67) aufweist und daß der eine Schenkel (66) in einem sich etwa rechtwinklig zur Türebene der Schaltzelle (7) erstreckenden Führungsrohr (62) geführt ist und der andere Schenkel (67) durch die Rückstellfeder (63) in Berührung mit der Schrägfläche (71) gehalten wird.

3. Vorrichtung zur Beeinflussung eines Fahrantriebes nach Anspruch 2,
**dadurch gekennzeichnet,** daß die Schrägfläche (71) Bestandteil eines am Boden der Schaltzelle (7) zu montierenden Trägers (60) des Führungsrohres (62) ist.

4. Vorrichtung zur Beeinflussung eines Fahrantriebes nach Anspruch 2 oder 3,
**dadurch gekennzeichnet,** daß das Führungsrohr (62) einen Gewindeabschnitt (64) und der Träger (60) eine Durchgangsöffnung für den Gewindeabschnitt (64) aufweist, derart, daß das Führungsrohr (62) in der Tiefenerstreckung der Schaltzelle (7) mittels zweier auf dem Gewindeabschnitt (64) sitzender Muttern (65) verstellbar zu montieren ist.

## Claims

1. Device for influencing a drive (20) of a movably arranged switching device (1) as a function of the position of a door (18) of a switchgear cell (7) which accommodates the switching device (1), the drive (20) having a threaded spindle (24) and a slide (36) being arranged in the access path to the threaded spindle (24), which slide (36) can be locked by a locking element as a function of a push rod (63) which can be operated by the door (18) and is prestressed into a quiescent position by a restoring force, characterized in that, in the case of a drive (20) which is fitted to the switching device (1) and, as a locking element, has a locking lever (50) which is mounted such that it can pivot and has an operating surface (51), the push rod (63) has a limb (67), which can be displaced along an inclined surface (71), as an operating element for the locking lever (50), and in that the inclined surface (71) is arranged at such an inclination angle that the locking lever (50) assumes a locked position when the door (18) is open and, as a result of the door (18) being closed, can be moved into a release position by means of the limb (67) acting axially on the push rod (63).

2. Device for influencing a drive according to Claim 1, characterized in that the push rod (63) has a U-shaped basic shape with two limbs (66, 67), and in that one limb (66) is guided in a guide tube (62) which extends approximately at right angles to the plane of the door of the switchgear cell (7), and the other limb (67) is held in contact with the inclined surface (71) by means of the restoring spring (63).

3. Device for influencing a drive according to Claim 2, characterized in that the inclined surface (71) is a component of a support (60) which is fitted to the base of the switchgear cell (7), of the guide tube (62).

4. Device for influencing a drive according to Claim 2 or 3, characterized in that the guide tube (62) has a threaded section (64), and the support (60) has an opening for the threaded section (64) to pass through, in such a manner that the guide tube (62) is fitted such that it can be displaced in the depth extent of the switchgear cell (7) by means of two nuts (65) which are seated on the threaded section (64).

## Revendications

1. Dispositif pour influer sur un organe (20) de déplacement d'un appareil (1) de commutation monté mobile en fonction de la position d'une porte (18) d'une cellule (7) de réception de l'appareil (1) de commutation. l'organe (20) de déplacement comportant une broche (24) filetée et il est prévu dans le trajet d'accès à la broche (24) filetée un coulisseau (36) qui peut être bloqué par un élément de verrouillage en fonction d'une biellette (63) pouvant être actionnée par la porte (18) et mise sous une tension préalable dans une position de repos par une force de rappel,
caractérisé en ce que, lorsque l'organe (20) de déplacement est monté sur l'appareil (1) de commutation, qui possède comme élément de blocage un levier (50) de blocage monté basculant et comportant une surface (51) de travail, la biellette (63) possède, en tant qu'élément d'actionnement du levier (50) de blocage, une branche (67) pouvant coulisser le long d'une surface (71) inclinée et en ce que la surface (71) inclinée est disposée en faisant un angle d'inclinaison telle que le levier (50) de blocage prend, lorsque la porte (18) est ouverte, une position de blocage et en raison de la fermeture de la porte (18), peut passer dans une position de dégagement par le fait que la biellette (63) est sollicitée axialement au moyen de la branche (67).

2. Dispositif pour influer sur un organe de déplacement suivant la revendication 1,
caractérisé en ce que la biellette (63) a une forme de base en U à deux branches (66,67) et en ce que l'une des branches (66) est guidée dans un tube (62) de guidage s'étendant à-peu-près à angle droit par rapport au plan de la porte de la cellule (7) et l'autre branche (67) est maintenue par le ressort (63) de rappel en contact avec la surface (71) inclinée.

3. Dispositif pour influer sur un organe de déplacement suivant la revendication 2,
caractérisé en ce que la surface (71) inclinée fait partie d'un support (60) du tube (62) de guidage, support qui peut être monté sur le fond de la cellule (7).

4. Dispositif pour influer sur un organe de déplacement suivant la revendication 2 ou 3,
caractérisé en ce que le tube (62) de guidage comporte un tronçon (64) fileté et le support (60) une ouverture de passage pour le tronçon (64) filetée de manière que le tube (62) de guidage puisse être monté réglable suivant la profondeur de la cellule (7) au moyen de deux écrous (65) se vissant sur le tronçon (64) fileté.
